# EUROPEAN PATENT APPLICATION

(11) **EP 3 537 614 A1**
(43) Date of publication of application: **11.09.2019**
(21) Application number: 19155273.6
(22) Date of filing: 12.12.2013
(51) Int. Cl.: H04B 1/40, H04B 1/00

(54) **BROADBAND SIGNAL RECEIVING METHOD AND DEVICE, RADIO-FREQUENCY PROCESSING UNIT AND BROADBAND ANTENNA**

(62) Divisional of application: 13899113.8
(71) Applicant: Huawei Technologies Co., Ltd., Shenzhen, Guangdong 518129 (CN)
(72) Inventor: PU, Tao, Shenzhen, Guangdong 518129 (CN); ZHANG, Xiaodong, Shenzhen, Guangdong 518129 (CN); ZHU, Qiang, Shenzhen, Guangdong 518129 (CN); CHEN, Fang, Shenzhen, Guangdong 518129 (CN)
(74) Representative: Isarpatent

(57) **Abstract**

Embodiments of the present invention provide a broadband signal receiving method and apparatus, a radio frequency processing unit, and a broadband antenna, which can reduce costs of a multi-frequency receiving solution. The apparatus includes: a preconfiguring unit, a filter unit, and a signal receiving and processing unit, where the preconfiguring unit is configured to preconfigure predetermined operating frequency bands of a filter unit and a signal receiving and processing unit of each receive channel, where the predetermined operating frequency band includes at least one frequency band; the filter unit is configured to perform filtering on a radio frequency signal received from a broadband antenna by a receive channel in which the filter unit is located, to obtain a filtered signal of a predetermined operating frequency band; and the signal receiving and processing unit is configured to receive and process a signal that is of the predetermined operating frequency band and in the filtered signal obtained by the filter unit of the receive channel in which the signal receiving and processing unit is located. The embodiments of the present invention are applicable to the field of communications technologies.

## Description

### TECHNICAL FIELD

The present invention relates to the field of communications technologies, and in particular, to a broadband signal receiving method and apparatus, a radio frequency processing unit, and a broadband antenna.

### BACKGROUND

As demands on data service bandwidth increase continuously in a mobile broadband (Mobile Broad Band, MBB) era, a performance gain of a solution to increasing uplink network traffic by using a 4 way receiver (4 Way Receiver, 4 Rx for short) or a multi-way receiver has been acknowledged by operators and equipment vendors.

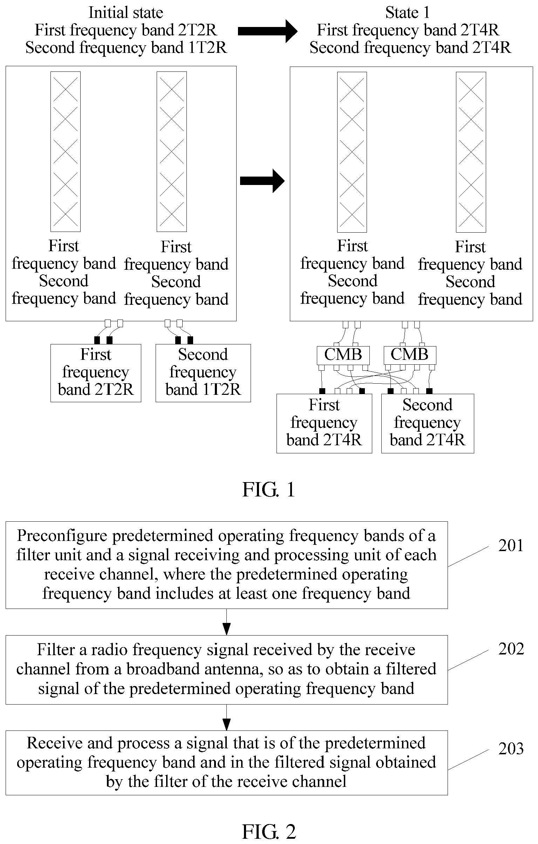

In the prior art, a processing capability of a radio frequency processing unit (Radio process unit, RU) module of an existing site, which may also be referred to as a legacy site, is mainly 1 transmitter and 2 receivers (1 transmit 2 receiver, 1T2R) or 2 transmitters and 2 receivers (2 transmit 2 receiver, 2T2R). A receiving capability of an existing antenna system is limited. To increase uplink network traffic, when an RU module is added or an RU module is replaced, a combiner needs to be added to share an antenna, which is specifically described by using FIG. 1 as an example.

In an initial state, the antenna supports receiving of signals of a first frequency band and a second frequency band, the RU module of the antenna supports 2T2R of the first frequency band and 1T2R of the second frequency band. In a state 1, to separately add two receive channels of the first frequency band and two receive channels of the second frequency band to the RU module, due to limitation by a quantity of antenna ports, a combiner (Combiner, CMB) needs to be added in the state 1. For a received signal, the combiner is used to distribute the signals of the first frequency band and the second frequency band of the antenna to corresponding single-frequency RU modules. That is, after receiving the signals of the first frequency band and the second frequency band by means of combining, the combiner separately sends a received signal to an RU module of the first frequency band and an RU module of the second frequency band; therefore, the two receive channels of the first frequency band, one transmit channel of the second frequency band, and the two receive channels of the second frequency band are added in an existing signal receiving and sending system. Correspondingly, one transmit channel and two receive channels of the second frequency band are added in a state 2, and two receive channels of the first frequency band are added in a state 3.

However, in this manner used in the prior art, RU modules of different frequency bands share an antenna port by using an added combiner. Adding a combiner results in increased material costs and a complex engineering connection, and use of the combiner increases a combined insertion loss of the RU modules and a risk of passive intermodulation.

### SUMMARY

Embodiments of the present invention provide a broadband signal receiving method and apparatus, a radio frequency processing unit, and a broadband antenna, which can reduce costs of a multi-frequency receiving solution, remove a combined insertion loss of an RU module, reduce a risk of passive intermodulation, and further improve performance of receiving a signal by the RU module.

The embodiments of the present invention use the following technical solutions:
According to a first aspect, the embodiments of the present invention provide a broadband signal receiving apparatus. The apparatus includes: a preconfiguring unit, a filter unit, and a signal receiving and processing unit, where
the preconfiguring unit is configured to preconfigure predetermined operating frequency bands of a filter unit and a signal receiving and processing unit of each receive channel, where the predetermined operating frequency band includes at least one frequency band;
the filter unit is configured to perform filtering on a radio frequency signal received from a broadband antenna by a receive channel in which the filter unit is located, to obtain a filtered signal of a predetermined operating frequency band; and
the signal receiving and processing unit is configured to receive and process a signal that is of the predetermined operating frequency band and in the filtered signal obtained by the filter unit of the receive channel in which the signal receiving and processing unit is located.

In a first possible implementation manner, with reference to the first aspect, the apparatus further includes a preselecting unit, where

the preselecting unit is configured to preselect a receive channel that receives a signal from a broadband antenna.

In a second possible implementation manner, with reference to the first aspect or the first possible implementation manner, the filter unit includes a broadband adjustable receive filter or a multi-frequency band receive filter.

In a third possible implementation manner, with reference to the first aspect or according to the first to the second possible implementation manners, the signal receiving and processing unit includes a multi-frequency band signal processing circuit or a broadband signal processing circuit.

In a fourth possible implementation manner, with reference to the first aspect or according to the first to the third possible implementation manners, the preselecting unit is configured to preselect a first receive channel and a second receive channel; and
the preconfiguring unit is configured to preconfigure predetermined operating frequency bands of a filter unit and a signal receiving and processing unit of the first receive channel and predetermined operating frequency bands of a filter unit and a signal receiving and processing unit of the second receive channel as a first frequency band, or a first frequency band and a second frequency band, or a first frequency band and a third frequency band, or a first frequency band, a second frequency band, and a third frequency band, where
the filter unit of the first receive channel specifically includes a first filter and a second filter, where the first filter is configured to perform filtering on a radio frequency signal received by the first receive channel from a broadband antenna, to obtain a filtered signal of the first frequency band; and the second filter is configured to perform filtering on the radio frequency signal received by the first receive channel from the broadband antenna, to obtain a filtered signal of the second frequency band, a filtered signal of the third frequency band, or filtered signals of the second frequency band and the third frequency band;
the filter unit of the second receive channel specifically includes: a third filter and a fourth filter, where the third filter is configured to perform filtering on a radio frequency signal received by the second receive channel from a broadband antenna, to obtain a filtered signal of the first frequency band; and the fourth filter is configured to perform filtering on the radio frequency signal received by the second receive channel from the broadband antenna, to obtain a filtered signal of the second frequency band, a filtered signal of the third frequency band, or filtered signals of the second frequency band and the third frequency band;
the signal receiving and processing unit of the first receive channel specifically includes a first signal receiving and processing unit and a second signal receiving and processing unit, where the first signal receiving and processing unit is configured to receive and process the filtered signal, obtained by the first filter of the first receive channel, of the first frequency band; and
the second signal receiving and processing unit is configured to receive and process the filtered signal that is of the second frequency band, the filtered signal that is of the third frequency band, or the filtered signals that are of the second frequency band and the third frequency band and obtained by the second filter of the first receive channel; and
the signal receiving and processing unit of the second receive channel specifically includes a third signal receiving and processing unit and a fourth signal receiving and processing unit, where the third signal receiving and processing unit is configured to receive and process the filtered signal, obtained by the third filter of the second receive channel, of the first frequency band; and
the fourth signal receiving and processing unit is configured to receive and process the filtered signal that is of the second frequency band, the filtered signal that is of the third frequency band, or the filtered signals that are of the second frequency band and the third frequency band and obtained by the fourth filter of the second receive channel.

In a fifth possible implementation manner, according to the fourth possible implementation manner, the preselecting unit is further configured to preselect a third receive channel and a fourth receive channel.
the preconfiguring unit is further configured to preconfigure predetermined operating frequency bands of a filter unit and a signal receiving and processing unit of the third receive channel and predetermined operating frequency bands of a filter unit and a signal receiving and processing unit of the fourth receive channel as a first frequency band, where
the filter unit of the third receive channel specifically includes a fifth filter unit, where the fifth filter unit is configured to perform filtering on a radio frequency signal received by the third receive channel from a broadband antenna, to obtain a filtered signal of the first frequency band;
the filter unit of the fourth receive channel specifically includes a sixth filter, where the sixth filter is configured to perform filtering on a radio frequency signal received by the fourth receive channel from a broadband antenna, to obtain a filtered signal of the first frequency band;
the signal receiving and processing unit of the third receive channel specifically includes: a fifth signal receiving and processing unit, where the first signal receiving and processing unit is configured to receive and process the filtered signal, obtained by the fifth filter of the third receive channel, of the first frequency band; and
the signal receiving and processing unit of the fourth receive channel specifically includes a sixth signal receiving and processing unit, where the sixth signal receiving and processing unit is configured to receive and process the filtered signal, obtained by the sixth filter of the fourth receive channel, of the first frequency band.

According to a second aspect, the embodiments of the present invention provide a radio frequency processing unit. The radio frequency processing unit includes: a processor, a filter, and a receiver, where
the processor is configured to preconfigure predetermined operating frequency bands of a filter unit and a signal receiving and processing unit of each receive channel, where the predetermined operating frequency band includes at least one frequency band;
the filter is configured to perform filtering on a radio frequency signal received from a broadband antenna by a receive channel in which the filter is located, to obtain a filtered signal of a predetermined operating frequency band; and
the receiver is configured to receive and process a signal that is of the predetermined operating frequency band and in the filtered signal obtained by the filter of the receive channel in which the receiver is located.

In a first possible implementation manner, with reference to the second aspect, the radio frequency processing unit further includes: a receive channel selecting switch, configured to: when the receive channel selecting switch is selected, preselect a receive channel that receives a signal from a broadband antenna.

In a second possible implementation manner, with reference to the second aspect or according to the first possible implementation manner, the filter includes a broadband adjustable receive filter or a multi-frequency band receive filter.

In a third possible implementation manner, with reference to the first aspect or according to the first to the second possible implementation manners, the receiver includes a multi-frequency band signal processing circuit or a broadband signal processing circuit.

According to a third aspect, the embodiments of the present invention provide a broadband antenna, including an antenna configured to receive a radio frequency signal, and further including the radio frequency processing unit described in the foregoing embodiment.

According to a fourth aspect, the embodiments of the present invention provide a broadband signal receiving method. The method includes:
preconfiguring predetermined operating frequency bands of a filter unit and a signal receiving and processing unit of each receive channel, where the predetermined operating frequency band includes at least one frequency band;
filtering, by the filter unit of each receive channel, a radio frequency signal received from a broadband antenna by the receive channel in which the filter unit is located, to obtain a filtered signal of the predetermined operating frequency band; and
receiving and processing, by the signal receiving and processing unit of each receive channel, a signal that is of the predetermined operating frequency band and in the filtered signal obtained by the filter unit of the receive channel in which the signal receiving and processing unit is located.

In a first possible implementation manner, with reference to the fourth aspect, the method further includes:
preselecting a receive channel that receives a signal from a broadband antenna.

In a second possible implementation manner, with reference to the fourth aspect or the first possible implementation manner, the filtering, by the filter unit of each receive channel, a radio frequency signal received from a broadband antenna by the receive channel in which the filter unit is located, to obtain a filtered signal of the predetermined operating frequency band specifically includes:
separately filtering, by a broadband adjustable receive filter or a multi-frequency band receive filter of each preselected receive channel, the radio frequency signal of the receive channel in which the broadband adjustable receive filter or the multi-frequency band receive filter is located, to obtain the filtered signal of the predetermined operating frequency band.

In a third possible implementation manner, with reference to the fourth aspect or the first possible implementation manner to the second possible implementation manner, the receiving and processing, by the signal receiving and processing unit of each receive channel, a signal that is of the predetermined operating frequency band and in the filtered signal obtained by the filter unit of the receive channel in which the signal receiving and processing unit is located specifically includes:
separately receiving and processing, by a multi-frequency band signal processing circuit or a broadband signal processing circuit of each receive channel, the signal that is of the predetermined operating frequency band and in the filtered signal obtained by the filter unit of the receive channel in which the multi-frequency band signal processing circuit or the broadband signal processing circuit is located.

The embodiments of the present invention provide a broadband signal receiving method and apparatus, a radio frequency processing unit, and a broadband antenna, where the apparatus includes: a preselecting unit, a filter unit, and a signal receiving and processing unit. The preconfiguring unit is configured to preconfigure predetermined operating frequency bands of a filter unit and a signal receiving and processing unit of each receive channel, where the predetermined operating frequency band includes at least one frequency band; the filter unit is configured to perform filtering on a radio frequency signal received from a broadband antenna by a receive channel in which the filter unit is located, to obtain a filtered signal of a predetermined operating frequency band; and the signal receiving and processing unit is configured to receive and process a signal that is of the predetermined operating frequency band and in the filtered signal obtained by the filter unit of the receive channel in which the signal receiving and processing unit is located. The apparatus can preconfigure a receive channel according to an actual requirement of a site. Then, each preconfigured receive channel filters the communications signal to obtain a filtered signal of a predetermined operating frequency band of each receive channel; and the receive channel preconfigures at least one predetermined operating frequency band; and then receives and processes the filtered signal of the predetermined operating frequency band. Therefore, the signal receiving apparatus can be used to reduce costs of a multi-frequency receiving solution, remove a combined insertion loss of an RU module, reduce a risk of passive intermodulation, and further improve performance of receiving a signal by the RU module.

### BRIEF DESCRIPTION OF DRAWINGS

FIG. 1 is a schematic diagram of a configuration of an RU module in a 4Rx scenario in the prior art;
FIG. 2 is a schematic flowchart of a broadband signal receiving method according to an embodiment of the present invention;
FIG. 3 is a first schematic structural diagram of a broadband signal receiving apparatus according to an embodiment of the present invention;
FIG. 4 is a second schematic structural diagram of a broadband signal receiving apparatus according to an embodiment of the present invention;
FIG. 5 is a third schematic structural diagram of a broadband signal receiving apparatus according to an embodiment of the present invention;
FIG. 6 is a fourth schematic structural diagram of a broadband signal receiving apparatus according to an embodiment of the present invention;
FIG. 7 is a fifth schematic structural diagram of a broadband signal receiving apparatus according to an embodiment of the present invention;
FIG. 8 is a sixth schematic structural diagram of a broadband signal receiving apparatus according to an embodiment of the present invention;
FIG. 9 is a seventh schematic structural diagram of a broadband signal receiving apparatus according to an embodiment of the present invention;
FIG. 10 is an eighth schematic structural diagram of a broadband signal receiving apparatus according to an embodiment of the present invention;
FIG. 11 is a schematic diagram of a configuration of an RU module in a broadband signal receiving apparatus 4Rx scenario according to an embodiment of the present invention;
FIG. 12 is a schematic structural diagram of a radio frequency signal processing module according to an embodiment of the present invention; and
FIG. 13 is a schematic structural diagram of a broadband antenna according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

The terms "system" and "network" may be used interchangeably in this specification. The term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between front and back associated objects.

As demands on data service bandwidth increase continuously in an MBB era, an RU module of a site deployed in an existing network is mainly 1 transmitter and 2 receivers or 2 transmitters and 2 receivers, which cannot meet a user's demand on bandwidth. A performance gain of a solution to increasing uplink network traffic by using a multi-way receiver, particularly by using a mainstream 4 way receiver has been acknowledged by operators and equipment vendors. For example, 2 transmitters and 2 receivers of an RU module of a single-frequency antenna needs to be upgraded to 2 transmitters and 4 transceivers; for an RU module of a multi-frequency antenna, each frequency band needs to be upgraded to 2 transmitters and 4 receivers according to a requirement.

To reduce costs of a multi-frequency receiving solution, improve performance of receiving a signal by an RU module, and reduce a risk of passive intermodulation, the embodiments of the present invention provide a broadband signal receiving apparatus. The apparatus first preselects a receive channel of a corresponding frequency band and preconfigures a predetermined operating frequency band of a corresponding receive channel of the RU module, according to a receiving capability that needs to be improved; and a predetermined operating frequency band of each receive channel includes at least one frequency band. In this way, each receive channel performs filtering on a received radio frequency signal to obtain a filtered signal of the predetermined operating frequency band; and then receives and processes a signal that is of the predetermined operating frequency band and in the filtered signal.

When the RU module provided in the embodiments of the present invention is used, receive channels of multiple frequency bands are configured according to a requirement, and no combiner needs to be added. This avoids the problem in FIG. 1, that is, each RU module can configure only a receive channel of a single frequency band, but if receive channels of multiple frequency bands need to be configured, multiple RU modules need to be configured, and due to limitation by a quantity of antenna ports, a corresponding quantity of combiners needs to be further added.

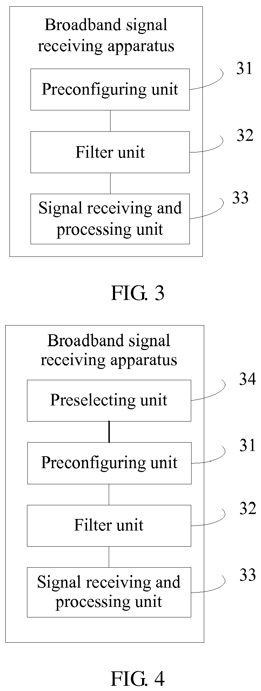

Specifically, as shown in FIG. 3, an embodiment of the present invention provides a broadband signal receiving apparatus, where the apparatus includes: a preconfiguring unit 31, a filter unit 32, and a signal receiving and processing unit 33.

The preconfiguring unit 31 is configured to preconfigure predetermined operating frequency bands of a filter unit 32 and a signal receiving and processing unit 33 of each receive channel, where the predetermined operating frequency band includes at least one frequency band.

It should be noted that the preconfiguring unit 31 of the RU module preconfigures, according to a receiving capability that actually needs to be improved, a corresponding frequency band of a receive channel as a predetermined operating frequency band, that is, the predetermined operating frequency band of the filter unit 32 and the signal receiving and processing unit 33 of each receive channel, where the predetermined operating frequency band of each receive channel includes at least one frequency band.

The filter unit 32 is configured to perform filtering on a radio frequency signal received from a broadband antenna by a receive channel in which the filter unit 32 is located, to obtain a filtered signal of a predetermined operating frequency band.

After receiving the radio frequency signal, the broadband antenna sends the signal to the RU module by using a feeder, and the filter unit of the RU module filters the received radio frequency signal.

The filter unit 32 includes a broadband adjustable receive filter or a multi-frequency band receive filter, and may further include a single-frequency band filter.

A predetermined operating frequency band of the broadband adjustable receive filter is adjustable, and the predetermined operating frequency band may include multiple operating frequency bands. A filtered signal obtained by the broadband adjustable receive filter by means of filtering is a broadband signal, where the broadband signal is a signal of at least one frequency band. A predetermined operating frequency band of the multi-frequency band receive filter is adjustable, and a filtered signal obtained by the multi-frequency band receive filter by means of filtering is a narrowband signal, where the narrowband signal is a signal of only one frequency band. An operating frequency band of the single-frequency band filter is non-adjustable, and a filtered signal obtained by means of filtering is a signal of one frequency band. It should be noted that both the broadband signal and the narrowband signal include at least a signal of the predetermined operating frequency band.

The signal receiving and processing unit 33 is configured to receive and process a signal that is of the predetermined operating frequency band and in the filtered signal obtained by the filter unit 32 of the receive channel in which the signal receiving and processing unit 33 is located.

The signal receiving and processing unit 33 of each receive channel separately receives and processes a filtered signal of respective channel, where processes of receiving and processing the filtered signal by the signal receiving and processing unit 33 include processes such as signal sampling and A/D conversion (analog-to-digital conversion). It should be noted that this part is the prior art, and details are not described in this embodiment of the present invention again.

The signal receiving and processing unit 33 includes a multi-frequency band signal processing circuit or a broadband signal processing circuit.

The multi-frequency band signal processing circuit is configured to receive and process the signal that is of the predetermined operating frequency band and in the filtered signal, where a predetermined operating frequency band of the multi-frequency band signal processing circuit may be adjusted according to an actual requirement, and the multi-frequency band signal processing circuit supports receiving and processing only on a filtered signal of a signal frequency band.

The broadband signal processing circuit is configured to receive and process the signal that is of the predetermined operating frequency band and in the filtered signal, where a predetermined operating frequency band of the broadband signal processing circuit may be adjusted according to an actual requirement, and the broadband signal processing circuit supports receiving and processing of filtered signals of multiple frequency bands.

It should be further noted that certainly, the RU module may further include receiving and sending of a signal of a fixed frequency band, which does not need to be preconfigured. For example, the RU module includes a receiving and sending processing unit of a signal of a first frequency band, and receiving and processing of signals of a second frequency band and a third frequency band may be preconfigured according to an actual requirement. A receiving and sending processing solution of the fixed frequency band is the prior art, and details are not described in this embodiment of the present invention again.

Optionally, as shown in FIG. 4, the apparatus further includes: a preselecting unit 34.

The preselecting unit 34 is configured to preselect a receive channel that receives a signal from a broadband antenna.

The preselecting unit 34 may be specifically a switch, an integrated circuit, or in another form, and is configured to connect to a receive channel.

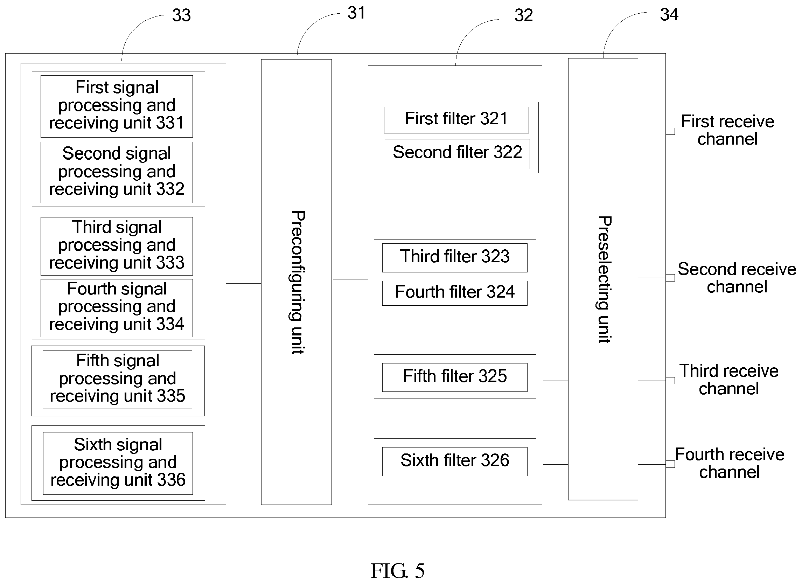

Optionally, as shown in FIG. 5, the preselecting unit 34 is configured to preselect a first receive channel and a second receive channel; and
the preconfiguring unit 31 is configured to preconfigure predetermined operating frequency bands of a filter unit 32 and a signal receiving and processing unit 33 of the first receive channel and predetermined operating frequency bands of a filter unit 32 and a signal receiving and processing unit 33 of the second receive channel as a first frequency band, or a first frequency band and a second frequency band, or a first frequency band and a third frequency band, or a first frequency band, a second frequency band, and a third frequency band, where
the filter unit 32 of the first receive channel specifically includes a first filter 321 and a second filter 322, where the first filter 321 is configured to perform filtering on a radio frequency signal received by the first receive channel from a broadband antenna, to obtain a filtered signal of the first frequency band; and the second filter 322 is configured to perform filtering on the radio frequency signal received by the first receive channel from the broadband antenna, to obtain a filtered signal of the second frequency band, a filtered signal of the third frequency band, or filtered signals of the second frequency band and the third frequency band;
the filter unit 32 of the second receive channel specifically includes a third filter 323 and a fourth filter 324, where the third filter 321 is configured to perform filtering on a radio frequency signal received by the second receive channel from a broadband antenna, to obtain a filtered signal of the first frequency band; and the fourth filter 322 is configured to perform filtering on the radio frequency signal received by the second receive channel from the broadband antenna, to obtain a filtered signal of the second frequency band, a filtered signal of the third frequency band, or filtered signals of the second frequency band and the third frequency band;
the signal receiving and processing unit 33 of the first receive channel specifically includes a first signal receiving and processing unit 331 and a second signal receiving and processing unit 332, where the first signal receiving and processing unit 331 is configured to receive and process the filtered signal, obtained by the first filter of the first receive channel, of the first frequency band; and
the second signal receiving and processing unit 332 is configured to receive and process the filtered signal of the second frequency band, the filtered signal of the third frequency band, or the filtered signals of the second frequency band and the third frequency band that are obtained by the second filter 322 of the first receive channel; and
the signal receiving and processing unit 33 of the second receive channel specifically includes a third signal receiving and processing unit 333 and a fourth signal receiving and processing unit 334, where the third signal receiving and processing unit 333 is configured to receive and process the filtered signal, obtained by the third filter 323 of the second receive channel, of the first frequency band; and
the fourth signal receiving and processing unit 334 is configured to receive and process the filtered signal of the second frequency band, the filtered signal of the third frequency band, or the filtered signals of the second frequency band and the third frequency band that are obtained by the fourth filter 324 of the second receive channel.

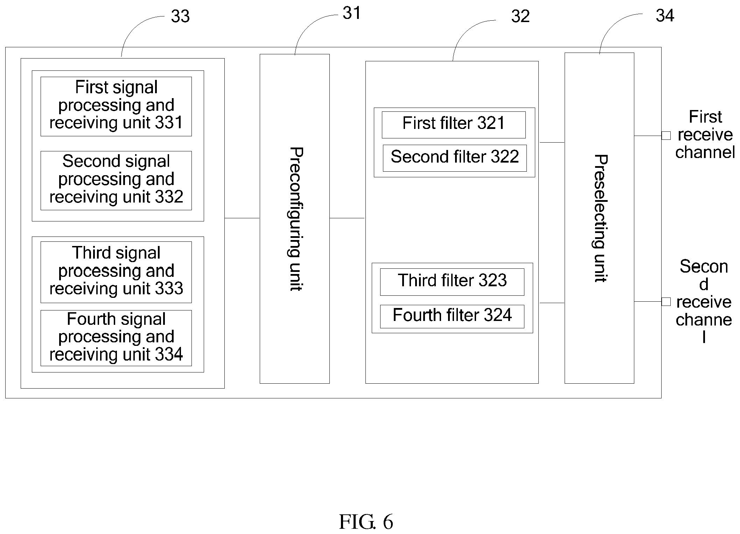

Optionally, as shown in FIG. 6, the preselecting unit 34 is configured to preselect a first receive channel, a second receive channel, a third receive channel, and a fourth receive channel; and
the preconfiguring unit 31 is configured to: preconfigure predetermined operating frequency bands of a filter unit 32 and a signal receiving and processing unit 33 of the first receive channel and predetermined operating frequency bands of a filter unit 32 and a signal receiving and processing unit 33 of the second receive channel as a first frequency band, or a first frequency band and a second frequency band, or a first frequency band and a third frequency band, or a first frequency band, a second frequency band, and a third frequency band; and preconfigure predetermined operating frequency bands of a filter unit 32 and a signal receiving and processing unit 33 of the third receive channel and a predetermined operating frequency band of a filter unit 32 and a signal receiving and processing unit 33 of the fourth receive channel as a first frequency band, where
the filter unit 32 of the first receive channel specifically includes a first filter 321 and a second filter 322, where the first filter 321 is configured to perform filtering on a radio frequency signal received by the first receive channel from a broadband antenna, to obtain a filtered signal of the first frequency band; and the second filter 322 is configured to perform filtering on the radio frequency signal received by the first receive channel from the broadband antenna, to obtain a filtered signal of the second frequency band, a filtered signal of the third frequency band, or filtered signals of the second frequency band and the third frequency band;
the filter unit 32 of the second receive channel specifically includes: a third filter 323 and a fourth filter 324 unit, where the third filter 323 is configured to perform filtering on a radio frequency signal received by the second receive channel from a broadband antenna, to obtain a filtered signal of the first frequency band; and the fourth filter 324 is configured to perform filtering on the radio frequency signal received by the second receive channel from the broadband antenna, to obtain a filtered signal of the second frequency band, a filtered signal of the third frequency band, or filtered signals of the second frequency band and the third frequency band;
the filter unit 32 of the third receive channel specifically includes a fifth filter 325, where the fifth filter 325 is configured to perform filtering on a radio frequency signal received by the third receive channel from a broadband antenna, to obtain a filtered signal of the first frequency band;
the filter unit 32 of the fourth receive channel specifically includes: a sixth filter 326, where the sixth filter 326 is configured to perform filtering on a radio frequency signal received by the fourth receive channel from a broadband antenna, to obtain a filtered signal of the first frequency band;
the signal receiving and processing unit 33 of the first receive channel specifically includes a first signal receiving and processing unit 331 and a second signal receiving and processing unit 332, where the first signal receiving and processing unit 331 is configured to receive and process the filtered signal, obtained by the first filter 321 of the first receive channel, of the first frequency band; and
the second signal receiving and processing unit 332 is configured to receive and process the filtered signal of the second frequency band, the filtered signal of the third frequency band, or the filtered signals of the second frequency band and the third frequency band that are obtained by the second filter 322 of the first receive channel;
the signal receiving and processing unit 33 of the second receive channel specifically includes a third signal receiving and processing unit 333 and a fourth signal receiving and processing unit 334, where the third signal receiving and processing unit 333 is configured to receive and process the filtered signal, obtained by the third filter 323 of the second receive channel, of the first frequency band; and
the fourth signal receiving and processing unit 334 is configured to receive and process the filtered signal of the second frequency band, the filtered signal of the third frequency band, or the filtered signals of the second frequency band and the third frequency band that are obtained by the fourth filter 324 of the second receive channel;
the signal receiving and processing unit 33 of the third receive channel specifically includes a fifth signal receiving and processing unit 335, where the fifth signal receiving and processing unit 335 is configured to receive and process the filtered signal, obtained by the fifth filter 325 of the third receive channel, of the first frequency band; and
the signal receiving and processing unit 33 of the fourth receive channel specifically includes a sixth signal receiving and processing unit 336, where the sixth signal receiving and processing unit 336 is configured to receive and process the filtered signal, obtained by the sixth filter 326 of the fourth receive channel, of the first frequency band.

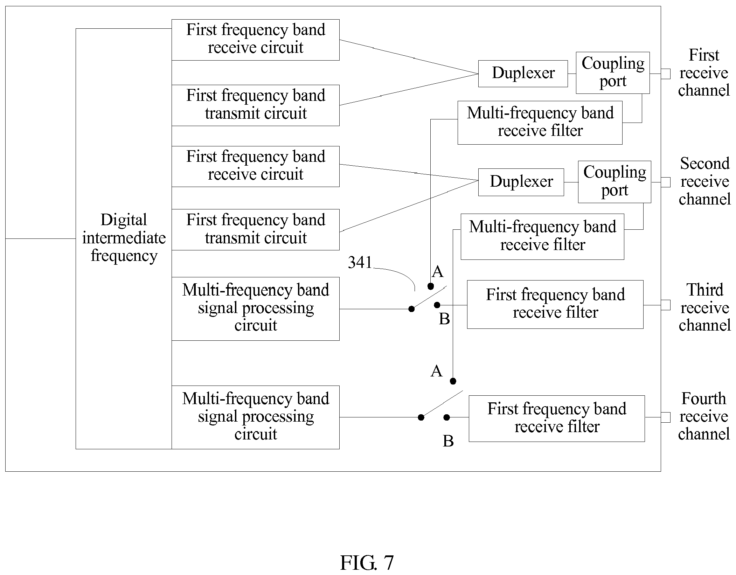

Specifically, an RU module that includes the apparatus described in the foregoing embodiment is used as an example in the following for description. Referring to FIG. 7, an RU module 70 that can implement inter-frequency 2 transmitters and 4 receivers is used as an example for description. The RU module 70 includes: four broadband antenna ports 21, 22, 23 and 24, where the four broadband antenna ports are respectively corresponding to four receive channels: a first receive channel, a second receive channel, a third receive channel, and a fourth receive channel; and filter units 32 of the four receive channels; and further includes four signal receiving and processing units, that is, two first frequency band receive circuits and two multi-frequency band signal processing circuits; and two single-pole double-throw switches 341.

A first filter 321 of the first receive channel is a duplexer, a second filter 322 is a multi-frequency band receive filter, and a filter unit 32 of the first receive channel further includes a coupling port.

A third filter 323 of the second receive channel is a duplexer, a fourth filter 324 is a multi-frequency band receive filter, and a filter unit 32 of the second receive channel further includes a coupling port.

A fifth filter 325 of the third receive channel is a first frequency band receive filter, and a sixth filter 326 of the fourth receive channel is a first frequency band receive filter.

An operating frequency band of the duplexer is a non-adjustable operating frequency band, that is, a first frequency band; and a predetermined operating frequency band of the multi-frequency band receive filter is configured according to an actual requirement. Frequency bands of the multi-frequency band receive filter are adjustable, and corresponding frequency bands are deployed according to requirements of a site, then signals of the corresponding frequency bands are filtered, and the filtered signals are coupled; and specifically, the multi-frequency band receive filter may be a multi-frequency band band-pass filter, or may be a multi-frequency band band-stop filter. The multi-frequency band receive filter supports filtering on signals of a second frequency band and a third frequency band.

The coupling port may be configured to: distribute signals, received from a broadband antenna, of different frequency bands to the duplexer and the multi-frequency band receive filter, or couple signals of different frequency bands and send a coupled signal to a broadband antenna.

The first frequency band receive filter is configured to receive and filter a coupled radio frequency signal of a first frequency band.

A first signal receiving and processing unit 331 of the first receive channel is a first frequency band receive circuit, and a second signal receiving and processing unit 332 is a multi-frequency band signal processing circuit.

A third signal receiving and processing unit 333 of the second receive channel is a first frequency band receive circuit, and a fourth signal receiving and processing unit 334 is a multi-frequency band signal processing circuit.

A fifth signal receiving and processing unit 335 of the third receive channel is a multi-frequency band signal processing circuit.

A sixth signal receiving and processing unit 336 of the fourth receive channel is a multi-frequency band signal processing circuit.

It should be noted that the signal receiving and processing units of the first receive channel and the third receive channel share a multi-frequency band signal processing circuit, and the signal receiving and processing units of the second receive channel and the fourth receive channel share a multi-frequency band signal processing circuit.

As shown in FIG. 7, both the first receive channel and the second receive channel further include a first frequency band transmit circuit.

Specifically, the first frequency band receive circuit is configured to perform receiving processing, such as analog-to-digital conversion and sampling, on the radio frequency signal, obtained by the duplexer by means of filtering and coupling, of the first frequency band; and a first frequency band transmit circuit is configured to perform processing, such as -digital-to-analog conversion, on a communications signal of the first frequency band, and then send a processed signal to the duplexer, so that the duplexer feeds the signal to an antenna.

An operating frequency band of a multi-frequency band signal processing circuit supports the first frequency band, a second frequency band, and a third frequency band.

A single-pole double-throw switch 341 is configured to preselect a receive channel of the RU module.

If 2 transmitters and 4 receivers of the first frequency band is configured according to an actual requirement, the single-pole double-throw switch 341 preselects a point B, and the first receive channel, the second receive channel, the third receive channel, and the fourth receive channel are preselected, and then predetermined operating frequency bands of two multi-frequency band receive filters and predetermined operating frequency bands of two multi-frequency band signal processing circuits are preconfigured, where the predetermined operating frequency bands of the two multi-frequency band receive filter are the first frequency band, and the predetermined operating frequency bands of the two multi-frequency band signal processing circuits are the first frequency band.

If 2 transmitters and 2 receivers of the first frequency band and a 2 way receiver of the second frequency band are configured according to an actual requirement, the single-pole double-throw switch 341 preselects a point A, and the first receive channel and the second receive channel are selected, and then predetermined operating frequency bands of two multi-frequency band receive filters and predetermined operating frequency bands of two signal receiving and processing units are preconfigured, where both the predetermined operating frequency bands of the two multi-frequency band receive filters are configured as the second frequency band, and the predetermined operating frequency bands of the two signal receiving and processing units are configured as the second frequency band.

If 2 transmitters and 2 receivers of the first frequency band and a 2 way receiver of the third frequency band are configured according to an actual requirement, the single-pole double-throw switch 341 preselects a point A, and the first receive channel and the second receive channel are selected, and then predetermined operating frequency bands of two multi-frequency band receive filters and predetermined operating frequency bands of two signal receiving and processing units are preconfigured, where both the predetermined operating frequency band of the two multi-frequency band receive filters are configured as the third frequency band, and the predetermined operating frequency band of the two signal receiving and processing units are configured as the third frequency band.

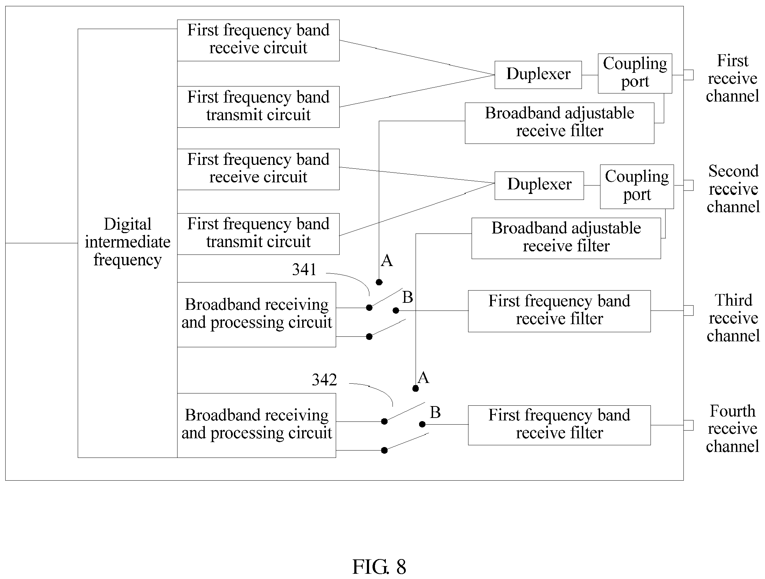

To further increase a downlink receiving capability of a network, the signal receiving and processing circuit 33 may also be a broadband signal processing circuit, and the broadband signal processing circuit may receive and process a signal of at least one frequency band at the same time. Specifically, as shown in FIG. 8, a second filter 322 and a fourth filter 324 of the RU module 80 are broadband adjustable receive filters, the RU module includes four signal receiving and processing circuits, including: two first frequency band receive circuits and two broadband signal processing circuits, where an operating frequency band of a broadband signal processing circuit supports a first frequency band to a third frequency band.

A preselecting unit 34 is specifically double-pole, double-throw switches 342 and 343, where the double-pole, double-throw switches 342 and 343 are respectively configured to preselect a receive channel of the RU module.

For a description of another part of the RU module 80, reference may be made to a description of the RU module 70, and details are not described herein again.

If 2 transmitters and 4 receivers of the first frequency band is configured according to an actual requirement, the double-pole, double-throw switches 342 and 343 separately preselect a point B, and the first receive channel, the second receive channel, the third receive channel, and the fourth receive channel are preselected, and then predetermined operating frequency bands of the two broadband signal processing circuits need to be preconfigured, where the predetermined operating frequency bands of the two broadband signal processing circuits are configured as the first frequency band or the first frequency band to the third frequency band.

If 2 transmitters and 4 receivers of the first frequency band, and a 2 way receiver of the second frequency band are configured according to an actual requirement, the double-pole, double-throw switches 342 and 343 separately preselect A, and the first receive channel, the second receive channel, the third receive channel, and the fourth receive channel are preselected, and then predetermined operating frequency bands of two broadband adjustable receive filters and predetermined operating frequency bands of the two broadband signal processing circuits need to be preconfigured, where the predetermined operating frequency bands of the two broadband adjustable receive filters are preconfigured as the second frequency band, and the predetermined operating frequency bands of the two broadband signal processing circuits are configured as the first frequency band to the third frequency band or the first frequency band and the second frequency band.

If 2 transmitters and 4 receivers of the first frequency band, and a 2 way receiver of the third frequency band are configured according to an actual requirement, the double-pole, double-throw switches 342 and 343 separately preselect A, and the first receive channel, the second receive channel, the third receive channel, and the fourth receive channel are preselected, and then predetermined operating frequency bands of two broadband adjustable receive filters and predetermined operating frequency bands of the two broadband signal processing circuits need to be preconfigured, where the predetermined operating frequency bands of the two broadband adjustable receive filters are preconfigured as the third frequency band, and the predetermined operating frequency bands of the two broadband signal processing circuits are configured as the first frequency band to the third frequency band.

If 2 transmitters and 4 receivers of the first frequency band, a 2 way receiver of the second frequency band, and a 2 way receiver of the third frequency band are configured according to an actual requirement, the double-pole, double-throw switches 342 and 343 respectively preselect A and B, and then predetermined operating frequency bands of two broadband adjustable receive filters and predetermined operating frequency bands of the two broadband signal processing circuits need to be preconfigured, where the predetermined operating frequency bands of the two broadband adjustable receive filters are preconfigured as the second frequency band and the third frequency band, and the predetermined operating frequency bands of the two broadband signal processing circuits are configured as the first frequency band to the third frequency band.

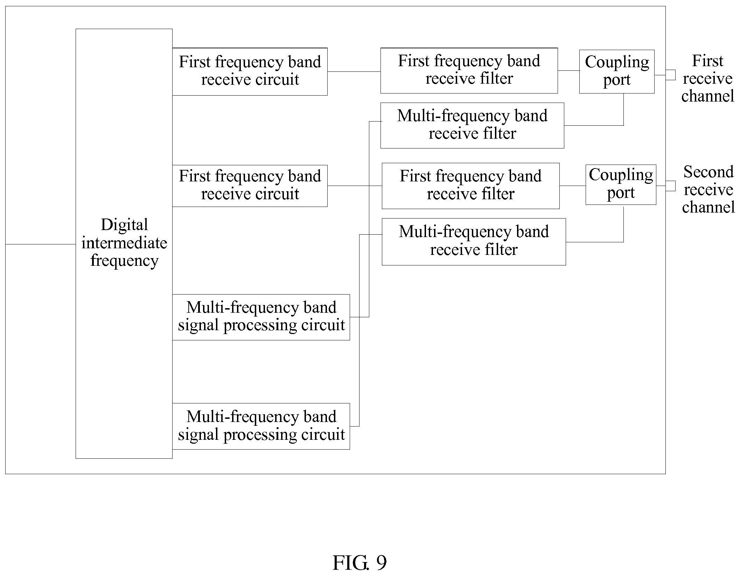

Further, according to an actual requirement of a site, it may also be that only a receive channel is added for the RU module. Specifically, as shown in FIG. 9, an RU module 90 is used as an example in the following for description. The RU module 90 includes two receive channels: a first receive channel and a second receive channel.

A first filter 321 of the first receive channel is a duplexer, a second filter 322 is a multi-frequency band receive filter, and a filter unit 32 of the first receive channel further includes a coupling port.

A third filter 323 of the second receive channel is a duplexer, a fourth filter 324 is a multi-frequency band receive filter, and a filter unit 32 of the second receive channel further includes a coupling port.

An operating frequency band of the duplexer is a non-adjustable operating frequency band, that is, a first frequency band; and a predetermined operating frequency band of the multi-frequency band receive filter is configured according to an actual requirement. Frequency bands of the multi-frequency band receive filter are adjustable, and corresponding frequency bands are deployed according to requirements of a site, then signals of the corresponding frequency bands are filtered, and the filtered signals are coupled; and specifically, the multi-frequency band receive filter may be a multi-frequency band band-pass filter, or may be a multi-frequency band band-stop filter. The multi-frequency band receive filter supports filtering on signals of a second frequency band and a third frequency band.

The coupling port may be configured to: distribute signals, received from a broadband antenna, of different frequency bands to the duplexer and the multi-frequency band receive filter, or couple signals of different frequency bands and send a coupled signal to a broadband antenna.

The first frequency band receive filter is configured to receive and filter a coupled radio frequency signal of a first frequency band.

A first signal receiving and processing unit 331 and a second signal receiving and processing unit 332 of the first receive channel are respectively a first frequency band receive circuit and a multi-frequency band signal processing circuit.

A third signal receiving and processing unit 331 and a fourth signal receiving and processing unit 332 of the first receive channel are respectively a first frequency band receive circuit and a multi-frequency band signal processing circuit.

For a description of each part of the RU module 90, reference may be made to a description of the RU module 70, and details are not described herein again.

If a 2 way receiver of the first frequency band and a 2 way receiver of the second frequency band are configured according to an actual requirement, predetermined operating frequency bands of multi-frequency band receive filters of the two preconfigured receive channels are the second frequency band, and predetermined operating frequency bands of two multi-frequency band signal processing circuits are the second frequency band.

If 2 receive channels of the first frequency band and 2 receive channels of the third frequency band are configured according to an actual requirement, predetermined operating frequency bands of multi-frequency band receive filters of the two preconfigured receive channels are the third frequency band, and predetermined operating frequency bands of two multi-frequency band signal processing circuits are preconfigured as the third frequency band.

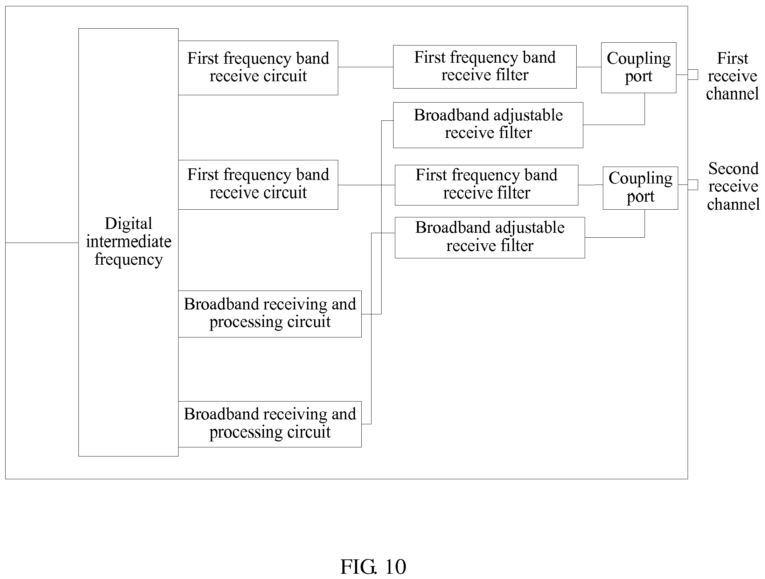

Further, the signal receiving and processing circuit may also be a broadband signal processing circuit, and the broadband signal processing circuit may receive and process a signal of at least one frequency band at the same time. As shown in FIG. 10, the RU module 100 includes two receive channels: a first receive channel and a second receive channel.

A first filter 321 of the first receive channel is a duplexer, a second filter 322 is a broadband adjustable receive filter, and a filter unit 32 of the first receive channel further includes a coupling port.

A third filter 323 of the second receive channel is a duplexer, a fourth filter 324 is a broadband adjustable receive filter, and a filter unit 32 of the second receive channel further includes a coupling port.

An operating frequency band of the duplexer is a first frequency band of a non-adjustable operating frequency band, and a predetermined operating frequency band of the broadband adjustable receive filter is configured according to an actual requirement. Frequency bands of the broadband adjustable receive filters are adjustable, and corresponding frequency bands are deployed according to requirements of a site, then signals of the corresponding frequency bands are filtered, and the filtered signals are coupled. The broadband adjustable receive filter supports filtering on signals of the second frequency band and the third frequency band.

The coupling port may be configured to: distribute signals, received from a broadband antenna, of different frequency bands to the duplexer and the broadband adjustable receive filter, or couple signals of different frequency bands and send a coupled signal to a broadband antenna.

The first frequency band receive filter is configured to receive and filter a coupled radio frequency signal of a first frequency band.

A first signal receiving and processing unit 331 and a second signal receiving and processing unit 332 of the first receive channel are respectively a first frequency band receive circuit and a broadband signal processing circuit.

A third signal receiving and processing unit 331 and a fourth signal receiving and processing unit 332 of the first receive channel are respectively a first frequency band receive circuit and a broadband signal processing circuit.

For a description of each part of the RU module 100, reference may be made to a description in the foregoing embodiments, and details are not described herein again.

If a 2 way receiver of the first frequency band, a 2 way receiver of the second frequency band, and a 2 way receiver of the third frequency band are configured according to an actual requirement, predetermined operating frequency bands of broadband adjustable receive filters of the two preconfigured receive channels are the first frequency band to the third frequency band, and predetermined operating frequency bands of broadband signal processing circuits are the first frequency band to the third frequency band.

Certainly, a 2 way receiver of the first frequency band and a 2 way receiver of the second frequency band or two receive channels of the second frequency band may further be configured according to an actual requirement, and details are not described herein again.

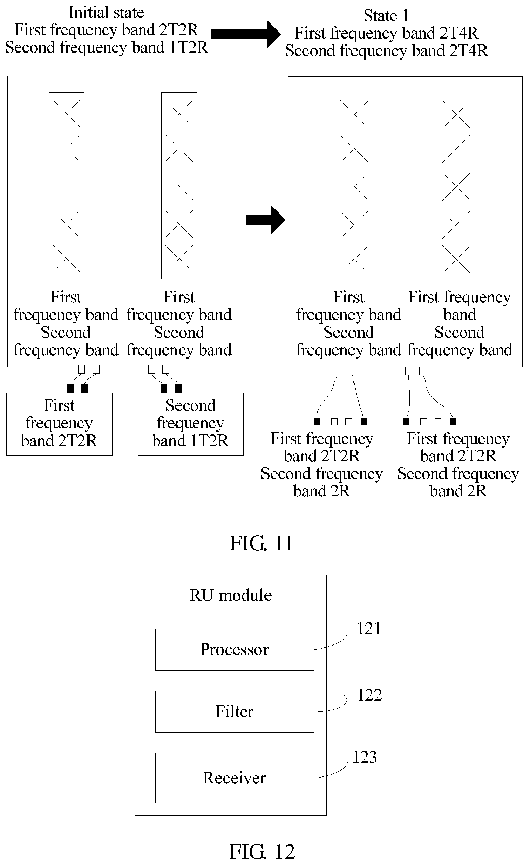

Further, as shown in FIG. 11, a legacy site that supports 2 transmitters and 4 receivers of the first frequency band and 1 transmitter and 2 receivers of the second frequency band is used as an example. The site may be upgraded to a site of 2 transmitters and 4 receivers of the first frequency band and 2 transmitters and 4 receivers of the second frequency band by using the signal receiving apparatus 70 or 80 provided in the foregoing embodiments.

This embodiment of the present invention provides a signal receiving apparatus, where the apparatus includes: a preselecting unit, a filter unit, and a signal receiving and processing unit. The preconfiguring unit is configured to preconfigure predetermined operating frequency bands of a filter unit 32 and a signal receiving and processing unit 33 of each receive channel, where the predetermined operating frequency band includes at least one frequency band; the filter unit is configured to perform filtering on a radio frequency signal received from a broadband antenna by a receive channel in which the filter unit is located, to obtain a filtered signal of a predetermined operating frequency band; and the signal receiving and processing unit is configured to receive and process a signal that is of the predetermined operating frequency band and in the filtered signal obtained by the filter unit 32 of the receive channel in which the signal receiving and processing unit is located. The apparatus can preconfigure a receive channel according to an actual requirement of a site. Then, each preconfigured receive channel filters the communications signal to obtain a filtered signal of a predetermined operating frequency band of each receive channel; and the receive channel preconfigures at least one predetermined operating frequency band; and then receives and processes the filtered signal of the predetermined operating frequency band. Therefore, the signal receiving apparatus can be used to reduce costs of a multi-frequency receiving solution, remove a combined insertion loss of an RU module, reduce a risk of passive intermodulation, and further improve performance of receiving a signal by the RU module.

An embodiment of the present invention provides a radio frequency processing unit RU module. As shown in FIG. 12, the RU module 120 includes: a processor 121, a filter 122, and a receiver 123.

The processor 121 is configured to preconfigure predetermined operating frequency bands of a filter unit and a signal receiving and processing unit of each receive channel, where the predetermined operating frequency band includes at least one frequency band.

The filter 122 is configured to perform filtering on a radio frequency signal received from a broadband antenna by a receive channel in which the filter 122 is located, to obtain a filtered signal of a predetermined operating frequency band.

The receiver 123 is configured to receive and process a signal that is of the predetermined operating frequency band and in the filtered signal obtained by the filter of the receive channel in which the receiver 123 is located.

Optionally, the radio frequency processing unit RU module further includes a receive channel selecting switch, configured to: when the receive channel selecting switch is selected, preselect a receive channel that receives a signal from a broadband antenna.

Optionally, the filter 122 includes a broadband adjustable receive filter or a multi-frequency band receive filter.

Optionally, the receiver 123 includes a multi-frequency band signal processing circuit or a broadband signal processing circuit.

For a description of each component of this embodiment of the present invention, reference may be made to the foregoing embodiment, and details are not described herein again.

This embodiment of the present invention provides an RU module, where the RU module includes: a processor, a filter, and a receiver. The processor is configured to preconfigure predetermined operating frequency bands of a filter unit and a signal receiving and processing unit of each receive channel, where the predetermined operating frequency band includes at least one frequency band; the filter is configured to perform filtering on a radio frequency signal received from a broadband antenna by a receive channel in which the filter is located, to obtain a filtered signal of a predetermined operating frequency band; and the receiver is configured to receive and process a signal that is of the predetermined operating frequency band and in the filtered signal obtained by the filter of the receive channel in which the receiver is located. The RU module may preconfigure a predetermined operating frequency band of a receive channel according to an actual requirement of a site. Then, each receive channel filters the radio frequency signal to obtain a filtered signal of a predetermined operating frequency band of each receive channel; and then receives and processes the filtered signal of the predetermined operating frequency band. Therefore, the RU module can be used to reduce costs of a multi-frequency receiving solution, remove a combined insertion loss of the RU module, reduce a risk of passive intermodulation, and further improve performance of receiving a signal by the RU module.

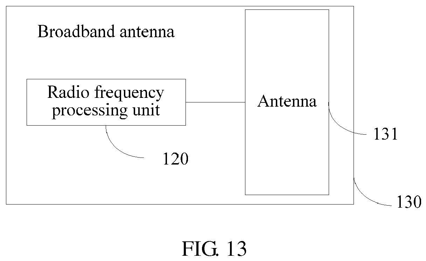

Further, as shown in FIG. 13, An embodiment of the present invention further provides a broadband antenna 130, where the broadband antenna includes an antenna 131 configured to receive a radio frequency signal, and further includes the RU module 120 described in the foregoing embodiment. For a description of the RU module, reference may be made to the foregoing embodiment, and details are not described in this embodiment again.

Based on the broadband signal receiving apparatus provided in the foregoing embodiment, an embodiment of the present invention provides a broadband signal receiving method. As shown in FIG. 2, the method includes:
201. Preconfigure predetermined operating frequency bands of a filter unit and a signal receiving and processing unit of each receive channel, where the predetermined operating frequency band includes at least one frequency band.
   It should be noted that the RU module preconfigures a predetermined operating frequency band of a corresponding receive channel of the RU module according to a receiving capability that actually needs to be improved, and a predetermined operating frequency band of each receive channel includes at least one frequency band.
202. The filter unit of each receive channel performs filtering on a radio frequency signal received from a broadband antenna by the receive channel in which the filter unit is located, to obtain a filtered signal of the predetermined operating frequency band.

After receiving the radio frequency signal, the broadband antenna sends the signal to the RU module by using a feeder, and the filter unit of the RU module filters the received radio frequency signal.

The filter unit includes a broadband adjustable receive filter, a multi-frequency band receive filter, or a single-frequency band filter.

A predetermined operating frequency band of the broadband adjustable receive filter is adjustable, and the predetermined operating frequency band may include multiple operating frequency bands. A filtered signal obtained by the broadband adjustable receive filter by means of filtering is a broadband signal, where the broadband signal is a signal of at least one frequency band. A predetermined operating frequency band of the multi-frequency band receive filter is adjustable, and a filtered signal obtained by the multi-frequency band receive filter by means of filtering is a narrowband signal, where the narrowband signal is a signal of only one frequency band. An operating frequency band of the single-frequency band filter is non-adjustable, and a filtered signal obtained by means of filtering is a signal of a frequency band. It should be noted that both the broadband signal and the narrowband signal include at least a signal of the predetermined operating frequency band.

203. Each preselected receive channel separately receives and processes the signal that is of the predetermined operating frequency band and in the filtered signal.

The signal receiving and processing unit of each receive channel separately receives and processes a filtered signal of respective channel, where processes of receiving and processing the filtered signal by the signal receiving and processing unit include processes such as signal sampling and analog-to-digital conversion. It should be noted that this part is the prior art, and details are not described in this embodiment of the present invention again.

The signal receiving and processing unit includes a multi-frequency band signal processing circuit or a broadband signal processing circuit.

The multi-frequency band signal processing circuit receives and processes the signal that is of the predetermined operating frequency band and in the filtered signal, where a predetermined operating frequency band of the multi-frequency band signal processing circuit may be adjusted according to an actual requirement, and the multi-frequency band signal processing circuit supports receiving and processing only on a filtered signal of a signal frequency band.

The broadband signal processing circuit receives and processes the signal that is of the predetermined operating frequency band and in the filtered signal, where a predetermined operating frequency band of the broadband signal processing circuit may be adjusted according to an actual requirement, and the broadband signal processing circuit supports receiving and processing of filtered signals of multiple frequency bands.

Optionally, the method further includes: preselecting a receive channel that receives a signal from a broadband antenna.

Optionally, the filtering, by the filter unit of each receive channel, the radio frequency signal received from the broadband antenna by the receive channel in which the filter unit is located, to obtain the filtered signal of the predetermined operating frequency band specifically includes:
separately filtering, by a broadband adjustable receive filter or a multi-frequency band receive filter of each preselected receive channel, the radio frequency signal of the receive channel in which the broadband adjustable receive filter or the multi-frequency band receive filter is located, to obtain the filtered signal of the predetermined operating frequency band.

Optionally, the receiving and processing, by the signal receiving and processing unit of each receive channel, the signal that is of the predetermined operating frequency band and in the filtered signal obtained by the filter unit of the receive channel in which the signal receiving and processing unit is located specifically includes:
separately receiving and processing, by a multi-frequency band signal processing circuit or a broadband signal processing circuit of each receive channel, the signal that is of the predetermined operating frequency band and in the filtered signal obtained by the filter unit of the receive channel in which the multi-frequency band signal processing circuit or the broadband signal processing circuit is located.

This embodiment of the present invention provides a broadband signal receiving method, where the method includes: preconfiguring predetermined operating frequency bands of a filter unit and a signal receiving and processing unit of each receive channel, where the predetermined operating frequency band includes at least one frequency band; filtering, by the filter unit of each receive channel, a radio frequency signal received from a broadband antenna by the receive channel in which the filter unit is located, to obtain a filtered signal of the predetermined operating frequency band; and receiving and processing, by the signal receiving and processing unit of each receive channel, a signal that is of the predetermined operating frequency band and in the filtered signal obtained by the filter unit of the receive channel in which the signal receiving and processing unit is located. The method can be used to reduce costs of a multi-frequency receiving solution, remove a combined insertion loss of an RU module, reduce a risk of passive intermodulation, and further improve performance of receiving a signal by the RU module.

It should be noted that the method and the apparatus that are presented in the technical solutions of the present invention are intended to implement multi-frequency signal receiving, where both the filter and the signal receiving and processing circuit that are described in each embodiment are intended to implement signal receiving. For example, the mentioned filters are all receive filters. Certainly, for solutions described in FIG. 7 and FIG. 8, the first receive channel and the second receive channel may also be used as transmit channels, that is, the first filter of the first receive channel and the second filter of the second receive channel are duplexers, where the duplexers are used to implement filtering of the signal, after receiving and sending, of the fixed frequency band, that is, the first frequency band.

Based on the foregoing descriptions of the embodiments, a person skilled in the art may clearly understand that, for the purpose of convenient and brief description, division of the foregoing function modules is used as an example for description. In an actual application, the foregoing functions can be allocated to different function modules and implemented according to a requirement, that is, an inner structure of an apparatus is divided into different function modules to implement all or some of the functions described above. For a detailed working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiment is merely exemplary. For example, the module or unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of nodes. Some or all of the units may be selected according to actual needs to achieve the objectives of the solutions of the embodiments.

In addition, function units in the embodiments of the present invention may be integrated into one processing unit, or each of the units may exist alone physically, or two or more units are integrated into one unit. The integrated unit may be implemented in a form of hardware, or may be implemented in a form of a software function unit.

When the integrated unit is implemented in the form of a software function unit and sold or used as an independent product, the integrated unit may be stored in a computer-readable storage medium. Based on such an understanding, the technical solutions of the present invention essentially, or the part contributing to the prior art, or all or some of the technical solutions may be implemented in the form of a software product. The software product is stored in a storage medium and includes several instructions for instructing a computer device (which may be a personal computer, a server, or a network device) or a processor (processor) to perform all or some of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

Further embodiments of the present invention are provided in the following. It should be noted that the numbering used in the following section does not necessarily need to comply with the numbering used in the previous sections.
Embodiment 1. A broadband signal receiving apparatus, wherein the apparatus comprises: a preconfiguring unit, a filter unit, and a signal receiving and processing unit, wherein
   the preconfiguring unit is configured to preconfigure predetermined operating frequency bands of a filter unit and a signal receiving and processing unit of each receive channel, wherein the predetermined operating frequency band comprises at least one frequency band;
   the filter unit is configured to perform filtering on a radio frequency signal received from a broadband antenna by a receive channel in which the filter unit is located, to obtain a filtered signal of the predetermined operating frequency band; and
   the signal receiving and processing unit is configured to receive and process a signal that is of the predetermined operating frequency band and in the filtered signal obtained by the filter unit of the receive channel in which the signal receiving and processing unit is located.
Embodiment 2. The apparatus according to embodiment 1, wherein the apparatus further comprises a preselecting unit, wherein
   the preselecting unit is configured to preselect a receive channel that receives a signal from a broadband antenna.
Embodiment 3. The apparatus according to embodiment 1 or 2, wherein the filter unit comprises a broadband adjustable receive filter or a multi-frequency band receive filter.
Embodiment 4. The apparatus according to any one of embodiments 1 to 3, wherein the signal receiving and processing unit comprises a multi-frequency band signal processing circuit or a broadband signal processing circuit.
Embodiment 5. The apparatus according to any one of embodiments 1 to 4, wherein the preselecting unit is configured to preselect a first receive channel and a second receive channel; and
   the preconfiguring unit is configured to preconfigure predetermined operating frequency bands of a filter unit and a signal receiving and processing unit of the first receive channel and predetermined operating frequency bands of a filter unit and a signal receiving and processing unit of the second receive channel as a first frequency band, or a first frequency band and a second frequency band, or a first frequency band and a third frequency band, or a first frequency band, a second frequency band, and a third frequency band, wherein
   the filter unit of the first receive channel specifically comprises a first filter and a second filter, wherein the first filter is configured to perform filtering on a radio frequency signal received by the first receive channel from a broadband antenna, to obtain a filtered signal of the first frequency band; and the second filter is configured to perform filtering on the radio frequency signal received by the first receive channel from the broadband antenna, to obtain a filtered signal of the second frequency band, a filtered signal of the third frequency band, or filtered signals of the second frequency band and the third frequency band;
   the filter unit of the second receive channel specifically comprises a third filter and a fourth filter, wherein the third filter is configured to perform filtering on a radio frequency signal received by the second receive channel from a broadband antenna, to obtain a filtered signal of the first frequency band; and the fourth filter is configured to perform filtering on the radio frequency signal received by the second receive channel from the broadband antenna, to obtain a filtered signal of the second frequency band, a filtered signal of the third frequency band, or filtered signals of the second frequency band and the third frequency band;
   the signal receiving and processing unit of the first receive channel specifically comprises a first signal receiving and processing unit and a second signal receiving and processing unit, wherein the first signal receiving and processing unit is configured to receive and process the filtered signal, obtained by the first filter of the first receive channel, of the first frequency band; and
   the second signal receiving and processing unit is configured to receive and process the filtered signal of the second frequency band, the filtered signal of the third frequency band, or the filtered signals of the second frequency band and the third frequency band that are obtained by the second filter of the first receive channel; and
   the signal receiving and processing unit of the second receive channel specifically comprises a third signal receiving and processing unit and a fourth signal receiving and processing unit, wherein the third signal receiving and processing unit is configured to receive and process the filtered signal, obtained by the third filter of the second receive channel, of the first frequency band; and
   the fourth signal receiving and processing unit is configured to receive and process the filtered signal of the second frequency band, the filtered signal of the third frequency band, or the filtered signals of the second frequency band and the third frequency band that are obtained by the fourth filter of the second receive channel.
Embodiment 6. The apparatus according to embodiment 5, wherein the preselecting unit is further configured to preselect a third receive channel and a fourth receive channel; and
   the preconfiguring unit is further configured to preconfigure predetermined operating frequency bands of a filter unit and a signal receiving and processing unit of the third receive channel and predetermined operating frequency bands of a filter unit and a signal receiving and processing unit of the fourth receive channel as a first frequency band, wherein
   the filter unit of the third receive channel specifically comprises a fifth filter unit, wherein the fifth filter unit is configured to perform filtering on a radio frequency signal received by the third receive channel from a broadband antenna, to obtain a filtered signal of the first frequency band;
   the filter unit of the fourth receive channel specifically comprises a sixth filter, wherein the sixth filter is configured to perform filtering on a radio frequency signal received by the fourth receive channel from a broadband antenna, to obtain a filtered signal of the first frequency band;
   the signal receiving and processing unit of the third receive channel specifically comprises: a fifth signal receiving and processing unit, wherein the first signal receiving and processing unit is configured to receive and process the filtered signal, obtained by the fifth filter of the third receive channel, of the first frequency band; and
   the signal receiving and processing unit of the fourth receive channel specifically comprises a sixth signal receiving and processing unit, wherein the sixth signal receiving and processing unit is configured to receive and process the filtered signal, obtained by the sixth filter of the fourth receive channel, of the first frequency band.
Embodiment 7. A radio frequency processing unit, wherein the radio frequency processing unit comprises a processor, a filter, and a receiver, wherein
   the processor is configured to preconfigure predetermined operating frequency bands of a filter unit and a signal receiving and processing unit of each receive channel, wherein the predetermined operating frequency band comprises at least one frequency band;
   the filter is configured to perform filtering on a radio frequency signal received from a broadband antenna by a receive channel in which the filter is located, to obtain a filtered signal of a predetermined operating frequency band; and
   the receiver is configured to receive and process a signal that is of the predetermined operating frequency band and in the filtered signal obtained by the filter of the receive channel in which the receiver is located.
Embodiment 8. The radio frequency processing unit according to embodiment 7, further comprising: a receive channel selecting switch, configured to: when the receive channel selecting switch is selected, preselect a receive channel that receives a signal from a broadband antenna.
Embodiment 9. The radio frequency processing unit according to embodiment 7 or 8, the filter comprises a broadband adjustable receive filter or a multi-frequency band receive filter.
Embodiment 10. The radio frequency processing unit according to any one of embodiments 7 to 9, wherein the receiver comprises a multi-frequency band signal processing circuit or a broadband signal processing circuit.
Embodiment 11. A broadband antenna, comprising an antenna configured to receive a radio frequency signal, and further comprising the radio frequency processing unit according to any one of embodiments 7 to 10.
Embodiment 12. A broadband signal receiving method, wherein the method comprises:
   preconfiguring predetermined operating frequency bands of a filter unit and a signal receiving and processing unit of each receive channel, wherein the predetermined operating frequency band comprises at least one frequency band;
   filtering, by the filter unit of each receive channel, a radio frequency signal received from a broadband antenna by the receive channel in which the filter unit is located, to obtain a filtered signal of the predetermined operating frequency band; and
   receiving and processing, by the signal receiving and processing unit of each receive channel, a signal that is of the predetermined operating frequency band and in the filtered signal obtained by the filter unit of the receive channel in which the signal receiving and processing unit is located.
Embodiment 13. The method according to embodiment 12, wherein the method further comprises:
   preselecting a receive channel that receives a signal from a broadband antenna.
Embodiment 14. The method according to embodiment 12 or 13, wherein the filtering, by the filter unit of each receive channel, a radio frequency signal received from a broadband antenna by the receive channel in which the filter unit is located, to obtain a filtered signal of the predetermined operating frequency band specifically comprises:
   separately filtering, by a broadband adjustable receive filter or a multi-frequency band receive filter of each preselected receive channel, the radio frequency signal of the receive channel in which the broadband adjustable receive filter or the multi-frequency band receive filter is located, to obtain the filtered signal of the predetermined operating frequency band.
Embodiment 15. The method according to any one of embodiments 12 to 14, wherein the receiving and processing, by the signal receiving and processing unit of each receive channel, a signal that is of the predetermined operating frequency band and in the filtered signal obtained by the filter unit of the receive channel in which the signal receiving and processing unit is located specifically comprises:
   separately receiving and processing, by a multi-frequency band signal processing circuit or a broadband signal processing circuit of each receive channel, the signal that is of the predetermined operating frequency band and in the filtered signal obtained by the filter unit of the receive channel in which the multi-frequency band signal processing circuit or the broadband signal processing circuit is located.

The foregoing descriptions are merely specific implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A broadband signal receiving apparatus, wherein the apparatus comprises: a preconfiguring unit (31), a filter unit (32), and a signal receiving and processing unit (33), wherein
the preconfiguring unit (31) is configured to preconfigure predetermined operating frequency bands of a filter unit (32) and a signal receiving and processing unit (33) of each receive channel, wherein the predetermined operating frequency band comprises at least one frequency band;
the filter unit (32) is configured to perform filtering on a radio frequency signal received from a broadband antenna by a receive channel in which the filter unit (32) is located, to obtain a filtered signal of the predetermined operating frequency band; and
the signal receiving and processing unit (33) is configured to receive and process a signal of the predetermined operating frequency band that is obtained by the filter unit (32) of the receive channel in which the signal receiving and processing unit is located.

2. The apparatus according to claim 1, wherein the apparatus further comprises a preselecting unit (34), wherein
the preselecting unit (34) is configured to preselect a receive channel that receives a signal from a broadband antenna.

3. The apparatus according to claim 1 or 2, wherein the filter unit (32) comprises a broadband adjustable receive filter or a multi-frequency band receive filter.

4. The apparatus according to any one of claims 1 to 3, wherein the signal receiving and processing unit (33) comprises a multi-frequency band signal processing circuit or a broadband signal processing circuit.

5. The apparatus according to claim 2, wherein the preselecting unit (34) is configured to preselect a first receive channel and a second receive channel; and
the preconfiguring unit (31) is configured to preconfigure predetermined operating frequency bands of a filter unit (32) and a signal receiving and processing unit (33) of the first receive channel and predetermined operating frequency bands of a filter unit (32) and a signal receiving and processing unit (33) of the second receive channel as a first frequency band, or a first frequency band and a second frequency band, or a first frequency band and a third frequency band, or a first frequency band, a second frequency band, and a third frequency band, wherein
the filter unit (32) of the first receive channel specifically comprises a first filter (321) and a second filter (322), wherein the first filter (321) is configured to perform filtering on a radio frequency signal received by the first receive channel from a broadband antenna, to obtain a filtered signal of the first frequency band; and the second filter (322) is configured to perform filtering on the radio frequency signal received by the first receive channel from the broadband antenna, to obtain a filtered signal of the second frequency band, a filtered signal of the third frequency band, or filtered signals of the second frequency band and the third frequency band;
the filter unit (32) of the second receive channel specifically comprises a third filter (323) and a fourth filter (324), wherein the third filter (323) is configured to perform filtering on a radio frequency signal received by the second receive channel from a broadband antenna, to obtain a filtered signal of the first frequency band; and the fourth filter (324) is configured to perform filtering on the radio frequency signal received by the second receive channel from the broadband antenna, to obtain a filtered signal of the second frequency band, a filtered signal of the third frequency band, or filtered signals of the second frequency band and the third frequency band;
the signal receiving and processing unit (33) of the first receive channel specifically comprises a first signal receiving and processing unit (331) and a second signal receiving and processing unit (332), wherein the first signal receiving and processing unit (331) is configured to receive and process the filtered signal, obtained by the first filter (321) of the first receive channel, of the first frequency band; and
the second signal receiving and processing unit (332) is configured to receive and process the filtered signal of the second frequency band, the filtered signal of the third frequency band, or the filtered signals of the second frequency band and the third frequency band that are obtained by the second filter (322) of the first receive channel; and
the signal receiving and processing unit (33) of the second receive channel specifically comprises a third signal receiving and processing unit (333) and a fourth signal receiving and processing unit (334), wherein the third signal receiving and processing unit (333) is configured to receive and process the filtered signal, obtained by the third filter (323) of the second receive channel, of the first frequency band; and
the fourth signal receiving and processing unit (334) is configured to receive and process the filtered signal of the second frequency band, the filtered signal of the third frequency band, or the filtered signals of the second frequency band and the third frequency band that are obtained by the fourth filter (324) of the second receive channel.

6. The apparatus according to claim 5, wherein the preselecting unit (34) is further configured to preselect a third receive channel and a fourth receive channel; and
the preconfiguring unit (31) is further configured to preconfigure predetermined operating frequency bands of a filter unit (32) and a signal receiving and processing unit (33) of the third receive channel and predetermined operating frequency bands of a filter unit (32) and a signal receiving and processing unit (33) of the fourth receive channel as a first frequency band, wherein
the filter unit (32) of the third receive channel specifically comprises a fifth filter unit (325), wherein the fifth filter unit (325) is configured to perform filtering on a radio frequency signal received by the third receive channel from a broadband antenna, to obtain a filtered signal of the first frequency band;
the filter unit (32) of the fourth receive channel specifically comprises a sixth filter (326), wherein the sixth filter (326) is configured to perform filtering on a radio frequency signal received by the fourth receive channel from a broadband antenna, to obtain a filtered signal of the first frequency band;
the signal receiving and processing unit (33) of the third receive channel specifically comprises: a fifth signal receiving and processing unit (335), wherein the fifth signal receiving and processing unit (335) is configured to receive and process the filtered signal, obtained by the fifth filter (325) of the third receive channel, of the first frequency band; and
the signal receiving and processing unit (33) of the fourth receive channel specifically comprises a sixth signal receiving and processing unit (336), wherein the sixth signal receiving and processing unit (336) is configured to receive and process the filtered signal, obtained by the sixth filter (326) of the fourth receive channel, of the first frequency band.

7. A broadband antenna, comprising an antenna configured to receive a radio frequency signal, and further comprising the radio frequency processing unit according to any one of claims 1-6.

8. A broadband signal receiving method, wherein the method comprises:
preconfiguring (201) predetermined operating frequency bands of a filter unit and a signal receiving and processing unit of each receive channel, wherein the predetermined operating frequency band comprises at least one frequency band;
filtering (202), by the filter unit of each receive channel, a radio frequency signal received from a broadband antenna by the receive channel in which the filter unit is located, to obtain a filtered signal of the predetermined operating frequency band; and
receiving and processing (203), by the signal receiving and processing unit of each receive channel, a signal that is of the predetermined operating frequency band and in the filtered signal obtained by the filter unit of the receive channel in which the signal receiving and processing unit is located.

9. The method according to claim 8, wherein the method further comprises:
preselecting a receive channel that receives a signal from a broadband antenna.

10. The method according to claim 9, wherein the filtering, by the filter unit of each receive channel, a radio frequency signal received from a broadband antenna by the receive channel in which the filter unit is located, to obtain a filtered signal of the predetermined operating frequency band specifically comprises:
separately filtering, by a broadband adjustable receive filter or a multi-frequency band receive filter of each preselected receive channel, the radio frequency signal of the receive channel in which the broadband adjustable receive filter or the multi-frequency band receive filter is located, to obtain the filtered signal of the predetermined operating frequency band.

11. The method according to any one of claims 8-10, wherein the receiving and processing, by the signal receiving and processing unit of each receive channel, a signal that is of the predetermined operating frequency band and in the filtered signal obtained by the filter unit of the receive channel in which the signal receiving and processing unit is located specifically comprises:
separately receiving and processing, by a multi-frequency band signal processing circuit or a broadband signal processing circuit of each receive channel, the signal that is of the predetermined operating frequency band and in the filtered signal obtained by the filter unit of the receive channel in which the multi-frequency band signal processing circuit or the broadband signal processing circuit is located.
